# EUROPÄISCHE PATENTANMELDUNG

(11) **EP 2 657 486 A1**
(43) Veröffentlichungstag der Anmeldung: **30.10.2013**
(21) Anmeldenummer: 12165339.8
(22) Anmeldetag: 24.04.2012
(51) Int. Cl.: F02D 17/02, F02D 41/00, F02D 15/00, F02B 73/00

(54) **Selbstzündende Brennkraftmaschine mit Teilabschaltung und Verfahren zum verbrauchsoptimierten Betreiben einer derartigen Brennkraftmaschine**

(71) Anmelder: Ford Global Technologies, LLC, Dearborn, MI 48126 (US)
(72) Erfinder: Breuer, Albert, 50769 Köln (DE); Linsel, Jan, 50767 Köln (DE); Lorenz, Thomas, 50737 Köln (DE); Ruhland, Helmut, 52249 Eschweiler (DE); Springer, Klaus Moritz, 58095 Hagen (DE)
(74) Vertreter: Drömer, Hans-Carsten

(57) **Zusammenfassung**

Die Erfindung betrifft eine selbstzündende Brennkraftmaschine mit mindestens zwei Zylindern (1, 2, 3, 4), bei der mindestens zwei Zylinder (1, 2, 3, 4) in der Art konfiguriert sind, dass sie mindestens zwei Gruppen mit jeweils mindestens einem Zylinder (1, 2, 3, 4) bilden, wobei der mindestens eine Zylinder (2, 3) mindestens einer Gruppe als lastabhängig schaltbarer Zylinder (2, 3) ausgebildet ist.

Die Erfindung betrifft des Weiteren ein Verfahren zum verbrauchsoptimierten Betreiben einer derartigen Brennkraftmaschine.

Es soll eine selbstzündende Brennkraftmaschine der genannten Art bereitgestellt werden, die hinsichtlich einer Teilabschaltung optimiert ist.

Gelöst wird diese Aufgabe durch eine selbstzündende Brennkraftmaschine der genannten Art, die dadurch gekennzeichnet ist, dass
- sich die mindestens zwei Gruppen durch unterschiedliche Verdichtungsverhältnisse ε*ᵢ* auszeichnen, wobei
- der mindestens eine Zylinder (1, 4) einer ersten Gruppe ein Verdichtungsverhältnis ε*₁* aufweist und der mindestens eine Zylinder (2, 3) einer zweiten Gruppe ein Verdichtungsverhältnis ε*₂* aufweist mit ε*₂* < ε*₁*.

## Beschreibung

Die Erfindung betrifft eine selbstzündende Brennkraftmaschine mit mindestens zwei Zylindern, bei der mindestens zwei Zylinder in der Art konfiguriert sind, dass sie mindestens zwei Gruppen mit jeweils mindestens einem Zylinder bilden, wobei der mindestens eine Zylinder mindestens einer Gruppe als lastabhängig schaltbarer Zylinder ausgebildet ist.

Des Weiteren betrifft die Erfindung ein Verfahren zum verbrauchsoptimierten Betreiben einer derartigen Brennkraftmaschine.

Bei der Entwicklung von Brennkraftmaschinen ist es ein grundsätzliches Ziel, den Kraftstoffverbrauch zu minimieren, wobei ein verbesserter Gesamtwirkungsgrad im Vordergrund der Bemühungen steht.

Obwohl Dieselmotoren, d. h. selbstzündende Brennkraftmaschinen, aufgrund der angewandten Qualitätsregelung einen höheren Wirkungsgrad, d. h. einen niedrigeren Kraftstoffverbrauch, aufweisen als Ottomotoren, bei denen die Last mittels Quantitätsregelung über die Füllung der Zylinder mit Frischgemisch, d. h. die Gemischmenge, eingestellt wird, besteht auch bei Dieselmotoren Verbesserungspotential und Verbesserungsbedarf hinsichtlich des Kraftstoffverbrauchs bzw. Wirkungsgrades.

Ein Konzept zur Reduzierung des Kraftstoffverbrauchs ist die Zylinderabschaltung, d. h. die Abschaltung einzelner Zylinder in bestimmten Lastbereichen. Der Wirkungsgrad des Dieselmotors im Teillastbetrieb kann durch eine Teilabschaltung verbessert, d. h. erhöht werden, denn die Abschaltung mindestens eines Zylinders einer Mehrzylinder-Brennkraftmaschine erhöht bei konstanter Motorleistung die Belastung der übrigen noch in Betrieb befindlichen Zylinder, so dass diese Zylinder in Bereichen höherer Lasten arbeiten, bei denen der spezifische Kraftstoffverbrauch niedriger ist. Das Lastkollektiv im Teillastbetrieb des Dieselmotors wird zu höheren Lasten hin verschoben.

Die während der Teilabschaltung weiter betriebenen Zylinder tolerieren zudem aufgrund der größeren zugeführten Kraftstoffmasse, d. h. aufgrund des fetteren Gemisches, höhere Abgasrückführraten.

Weitere Wirkungsgradvorteile ergeben sich dadurch, dass ein abgeschalteter Zylinder infolge der fehlenden Verbrennung keine Wandwärmeverluste infolge eines Wärmeüberganges von den Verbrennungsgasen an die Brennraumwände generiert.

Die im Stand der Technik beschriebenen Mehrzylinder-Brennkraftmaschinen mit Teilabschaltung und die dazugehörigen Verfahren zum Betreiben dieser Brennkraftmaschinen weisen dennoch deutliches Verbesserungspotential auf.

Vor diesem Hintergrund ist es eine Aufgabe der vorliegenden Erfindung, eine selbstzündende Brennkraftmaschine gemäß dem Oberbegriff des Anspruchs 1 bereitzustellen, die hinsichtlich einer Teilabschaltung optimiert ist.

Eine weitere Teilaufgabe der vorliegenden Erfindung besteht darin, ein Verfahren zum verbrauchsoptimierten Betreiben einer derartigen Brennkraftmaschine aufzuzeigen.

Gelöst wird die erste Teilaufgabe durch eine selbstzündende Brennkraftmaschine mit mindestens zwei Zylindern, bei der mindestens zwei Zylinder in der Art konfiguriert sind, dass sie mindestens zwei Gruppen mit jeweils mindestens einem Zylinder bilden, wobei der mindestens eine Zylinder mindestens einer Gruppe als lastabhängig schaltbarer Zylinder ausgebildet ist, und die dadurch gekennzeichnet ist, dass
- sich die mindestens zwei Gruppen durch unterschiedliche Verdichtungsverhältnisse *εᵢ* auszeichnen, wobei
- der mindestens eine Zylinder einer ersten Gruppe ein Verdichtungsverhältnis *ε₁* aufweist und der mindestens eine Zylinder einer zweiten Gruppe ein Verdichtungsverhältnis *ε₂* aufweist mit *ε₂* < *ε₁*.

Die Zylinder mindestens einer Gruppe sind schaltbar ausgebildet. Dadurch ergeben sich verschiedene Verfahrensvarianten zum Betreiben entsprechend unterschiedlicher Ausführungsformen der Brennkraftmaschine; wie im Einzelnen weiter unten im Zusammenhang mit den Unteransprüchen noch beschrieben wird. Das wesentliche Unterscheidungsmerkmal besteht darin, ob nur eine der mindestens zwei Zylindergruppen oder mehr als eine Zylindergruppe schaltbar ausgebildet ist. Die letztgenannte Variante gestattet nicht nur ein Zuschalten, sondern insbesondere ein Umschalten und gegebenenfalls ein späteres - dann erneutes - Zuschalten.

Grundsätzlich - und das ist allen Varianten immanent - wird im Teillastbetrieb der Brennkraftmaschine, d. h. bei niedrigen und gegebenenfalls mittleren Lasten, der mindestens eine Zylinder einer Gruppe abgeschaltet, während der mindestens eine Zylinder der mindestens einen anderen Gruppe weiter betrieben wird. Bei Unterschreiten einer vorgebbaren Last erfolgt somit eine Teilabschaltung, wodurch sich die Lastanforderung an den mindestens einen weiter in Betrieb befindlichen Zylinder erhöht, was zu den bereits eingangs beschriebenen Vorteilen führt. Die Leistungsanforderung an die während der Teilabschaltung noch in Betrieb befindlichen Zylinder steigt, so dass diese Zylinder bei höheren Lasten mit niedrigerem spezifischem Kraftstoffverbrauch betrieben werden. Zudem erzeugt ein abgeschalteter Zylinder keine Wandwärmeverluste und trägt somit nicht zu Wirkungsgradverlusten infolge eines Wärmeübergangs in die Motorstruktur bei.

Erfindungsgemäß wird die Teilabschaltung im Teillastbetrieb des Dieselmotors durch ein konstruktives Merkmal weiter optimiert, nämlich dadurch, dass die Zylindergruppen der erfindungsgemäßen Brennkraftmaschine unterschiedliche Verdichtungsverhältnisse *εᵢ* aufweisen.

Zu berücksichtigen ist dabei, dass der Wirkungsgrad *η* mit dem Verdichtungsverhältnis *εᵢ* mehr oder weniger korreliert, d. h. der Wirkungsgrad *η* bei einem größeren Verdichtungsverhältnis *εᵢ* in der Regel höher ist und bei einem kleineren Verdichtungsverhältnis *εᵢ* in der Regel niedriger ist. Zu sehr hohen Verdichtungsverhältnissen hin kann sich dieser grundsätzliche Zusammenhang aber auflösen, da dann unter anderem der Blow-by stark zunimmt, was sich nachteilig auf den Wirkungsgrad auswirkt.

Die unterschiedlichen Verdichtungsverhältnisse *εᵢ* sind das Resultat der Auslegung der Zylindergruppen auf unterschiedliche Betriebszustände und Lastbereiche. Ein Dieselmotor benötigt zur Einleitung der Selbstzündung ein bestimmtes Verdichtungsverhältnis, d. h. ein Mindest-Verdichtungsverhältnis, insbesondere beim Start, d. h. beim erstmaligen Einleiten der Verbrennung bei gegebenenfalls noch kalter Brennkraftmaschine. Es können beispielsweise Verdichtungsverhältnisse *εᵢ* ≈ 18 erforderlich werden, um eine sichere Selbstentzündung bei einem Kaltstart zu gewährleisten, falls keine anderen Maßnahmen ergriffen werden, die ein niedrigeres Verdichtungsverhältnis tolerabel erscheinen lassen. Hingegen ist unter rein thermodynamischen Aspekten ein Verdichtungsverhältnis *εᵢ* ≈ 16 zu bevorzugen, um den Wirkungsgrad der Brennkraftmaschine zu optimieren.

Aus dem zuvor Gesagten folgt, dass der mindestens eine im unteren Teillastbereich in Betrieb befindliche Zylinder vorteilhafterweise mit einem bzw. dem höheren Verdichtungsverhältnis *ε₁* auszustatten ist. Die Brennkraftmaschine könnte dann auch mit diesem mindestens einen Zylinder sicher gestartet werden. Der mindestens eine Zylinder der zweiten Gruppe ist dann auf höhere Lasten auszulegen, d. h. mit dem niedrigen Verdichtungsverhältnis *ε₂* auszustatten. Letzteres trägt auch dem höheren Temperatur- und Druckniveau bei höheren Lasten Rechnung. Das niedrige Verdichtungsverhältnis *ε₂* mindert gegebenenfalls den Wirkungsgrad der dazugehörigen zweiten Zylindergruppe, reduziert aber auch die mechanische Belastung der Motorstruktur bei höheren Lasten und zudem den Blow-by in diesem Lastbereich, was wiederum Wirkungsgradvorteile mit sich bringt.

Aus dem zuvor Gesagten ergibt sich auch, dass die erfindungsgemäße Brennkraftmaschine nicht nur einen höheren Wirkungsgrad *η* im Teillastbetrieb, sondern vielmehr auch im Bereich höherer Lasten aufweist.

Die Zylindergruppen können sich auch in anderen Betriebsparametern oder Konstruktionsmerkmalen, beispielsweise der Kühlung, dem Brennverfahren, dem Luftverhältnis *λ*, den Einlaßkanälen, den Auslaßkanälen und/oder den Einspritzdüsen voneinander unterscheiden.

Mit der erfindungsgemäßen Brennkraftmaschine wird eine selbstzündende Brennkraftmaschine gemäß dem Oberbegriff des Anspruchs 1 bereitgestellt, die hinsichtlich einer Teilabschaltung optimiert ist. Damit wird die erste der Erfindung zugrunde liegende Aufgabe gelöst.

Die erfindungsgemäße Brennkraftmaschine hat mindestens zwei Zylinder bzw. mindestens zwei Gruppen mit jeweils mindestens einem Zylinder. Insofern sind Brennkraftmaschinen mit drei Zylindern, die in drei Gruppen mit jeweils einem Zylinder konfiguriert sind, oder Brennkraftmaschinen mit sechs Zylindern, die in drei Gruppen mit jeweils zwei Zylindern konfiguriert sind, ebenfalls erfindungsgemäße Brennkraftmaschinen. Die drei Zylindergruppen können unterschiedliche Verdichtungsverhältnisse *εᵢ* aufweisen und im Rahmen einer Teilabschaltung sukzessive zugeschaltet bzw. einzeln und unabhängig voneinander abgeschaltet werden, wodurch auch ein zweimaliges Umschalten realisiert werden kann. Die Teilabschaltung wird dadurch weiter optimiert. Die Zylindergruppen können auch eine unterschiedliche Anzahl an Zylindern umfassen.

Vorteilhaft sind Ausführungsformen der selbstzündenden Brennkraftmaschine, bei denen bei Teilabschaltung der mindestens eine Zylinder der ersten Gruppe der mindestens eine im Teillastbetrieb der Brennkraftmaschine in Betrieb befindliche Zylinder ist, so dass mit dem höheren Verdichtungsverhältnis *ε₁* der Wirkungsgrad der Brennkraftmaschine bei niedrigen Lasten optimiert wird, wobei eine niedrige Last *T_{low},* d. h. eine Last im unteren Teillastbereich, eine Last ist, die weniger als 50%, vorzugsweise weniger als 30% der maximalen Last *T_{max,n}* bei der momentan vorliegenden Drehzahl n beträgt.

Weitere vorteilhafte Ausführungsformen der selbstzündenden Brennkraftmaschine werden in Zusammenhang mit den Unteransprüchen erörtert.

Vorteilhaft sind Ausführungsformen der selbstzündenden Brennkraftmaschine, bei denen der mindestens eine Zylinder der zweiten Gruppe als zuschaltbarer Zylinder ausgebildet ist, der bei Unterschreiten einer vorgebbaren Last *T_{down}* abgeschaltet ist und bei Überschreiten einer vorgebbaren Last *Tᵤₚ* zugeschaltet ist.

Die Brennkraftmaschine wird mit dem mindestens einen Zylinder der ersten Gruppe gestartet und bei niedrigen Lasten betrieben. Das hohe Verdichtungsverhältnis *ε₁* der ersten Gruppe sorgt für einen verbesserten Wirkungsgrad der Brennkraftmaschine bei niedrigen Lasten. Der mindestens eine Zylinder der zweiten Gruppe ist auf höhere Lasten ausgelegt und wird bei Überschreiten einer vorgebbaren Last *Tᵤₚ* zugeschaltet, wobei der mindestens eine Zylinder der ersten Gruppe ein ständig in Betrieb befindlicher Zylinder ist.

Im Teillastbetrieb wird der mindestens eine Zylinder der zweiten Gruppe bei Unterschreiten einer vorgebbaren Last wieder abgeschaltet, wodurch sich die Lastanforderung an den mindestens einen verbliebenen Zylinder der ersten Gruppe erhöht. Die Vorteile sind die bereits oben Genannten.

Vorteilhaft sind auch Ausführungsformen der selbstzündenden Brennkraftmaschine, bei denen sowohl der mindestens eine Zylinder der ersten Gruppe als auch der mindestens eine Zylinder der zweiten Gruppe als schaltbarer Zylinder ausgebildet ist.

Im Unterschied zu der zuvor beschriebenen Ausführungsform sind vorliegend beide Zylindergruppen als schaltbare Gruppen ausgebildet. Dies gestattet nicht nur ein Zuschalten, sondern vielmehr ein Umschalten zwischen den mindestens zwei Zylindergruppen und auch eine Kombination von Umschalten und Zuschalten. Im Zusammenhang mit der Beschreibung des erfindungsgemäßen Verfahrens bzw. der Verfahrensvarianten werden die unterschiedlichen Vorgehensweisen erörtert.

Vorteilhaft sind Ausführungsformen der selbstzündenden Brennkraftmaschine, bei denen die mindestens zwei Zylinder zwei Gruppen mit jeweils mindestens einem Zylinder bilden.

Zwei Zylindergruppen haben gegenüber Ausführungsformen mit mehreren Zylindergruppen den Vorteil, dass die Steuerung bzw. Regelung der Teilabschaltung weniger komplex ist. Zudem ist zu berücksichtigen, dass die Realisierung eines Massen- und Momentausgleichs, der vorzugsweise ebenfalls in Teilen zuschaltbar ist, infolge der unterschiedlichen Verdichtungsverhältnisse *εᵢ* erschwert wird und der Aufwand hierfür mit der Zunahme der Anzahl an Zylindergruppen deutlich steigt.

Vorteilhaft sind Ausführungsformen der selbstzündenden Brennkraftmaschine, bei denen der mindestens eine Zylinder der ersten Gruppe ein Verdichtungsverhältnis *ε₁* aufweist und der mindestens eine Zylinder der zweiten Gruppe ein Verdichtungsverhältnis *ε₂* aufweist mit *ε₂* +*1* < *ε₁*.

Vorteilhaft sind auch Ausführungsformen der selbstzündenden Brennkraftmaschine, bei denen der mindestens eine Zylinder der ersten Gruppe ein Verdichtungsverhältnis *ε₁* aufweist und der mindestens eine Zylinder der zweiten Gruppe ein Verdichtungsverhältnis *ε₂* aufweist mit *ε₂* + *2* < *ε₁*.

Vorteilhaft sind auch Ausführungsformen der selbstzündenden Brennkraftmaschine, bei denen der mindestens eine Zylinder der ersten Gruppe ein Verdichtungsverhältnis *ε₁* aufweist und der mindestens eine Zylinder der zweiten Gruppe ein Verdichtungsverhältnis *ε₂* aufweist mit *ε₂* + *3* < *ε₁*.

Während die drei vorstehenden Ausführungsformen auf den relativen Unterschied der zwei Zylindergruppen im Verdichtungsverhältnis *εᵢ* abstellen, haben die folgenden Ausführungsformen das absolute Verdichtungsverhältnis der beiden Gruppen zum Gegenstand.

Vorteilhaft sind Ausführungsformen der selbstzündenden Brennkraftmaschine, bei denen der mindestens eine Zylinder der zweiten Gruppe ein Verdichtungsverhältnis *ε₂* aufweist mit 13 < *ε₂* < *17*, vorzugsweise mit *14* < *ε₂* < *16*.*5*.

Der mindestens eine Zylinder der zweiten Gruppe weist ein thermodynamisch günstiges bzw. günstigeres Verdichtungsverhältnis auf, mit dem sich der Wirkungsgrad der zweiten Zylindergruppe und damit auch der Wirkungsgrad *η* der Brennkraftmaschine verbessern lässt.

Vorteilhaft sind auch Ausführungsformen der selbstzündenden Brennkraftmaschine, bei denen der mindestens eine Zylinder der ersten Gruppe ein Verdichtungsverhältnis *ε₁* aufweist mit 17 < *ε₁* < 20, vorzugsweise mit 17.5 < *ε₁* < 19.

Der mindestens eine Zylinder der ersten Gruppe weist ein ausreichend hohes Verdichtungsverhältnis auf, um eine sichere Einleitung der Selbstzündung zu gewährleisten, so dass diese Zylindergruppe zumindest für den Start bzw. Kaltstart der Brennkraftmaschine die bevorzugte Gruppe ist.

Vorteilhaft sind Ausführungsformen der selbstzündenden Brennkraftmaschine, bei denen
- sich die mindestens zwei Gruppen durch unterschiedliche Zylindervolumen *Vᵢ* auszeichnen, wobei
- der mindestens eine Zylinder der ersten Gruppe ein Zylindervolumen *V₁* aufweist und der mindestens eine Zylinder der zweiten Gruppe ein Zylindervolumen *V₂* aufweist mit *V₂* > *V₁*.

Die Ausstattung der beiden Zylindergruppen mit unterschiedlichen Zylindervolumen *Vᵢ* dient wiederum der Optimierung der Teilabschaltung. Hierzu wird abermals ein konstruktives Merkmal der Brennkraftmaschine bzw. der Zylinder, nämlich das Zylindervolumen *Vᵢ* herangezogen und zwar zusätzlich zu den obligatorisch verschiedenen Verdichtungsverhältnissen *εᵢ*.

Die Zylinder der ersten Gruppe haben ein kleineres, vorzugsweise ein deutlich kleineres, Zylindervolumen *V₁*, so dass - gleichgroße Anzahl an Zylindern je Gruppe vorausgesetzt - der überwiegende Anteil des Gesamtvolumens der Brennkraftmaschine von Zylindern der zweiten Gruppe gestellt wird und damit von Zylindern mit einem thermodynamisch vorteilhafteren Verdichtungsverhältnis *ε₂*.

Vorteilhaft sind Ausführungsformen der selbstzündenden Brennkraftmaschine, bei denen der mindestens eine Zylinder der ersten Gruppe ein Zylindervolumen *V₁* aufweist und der mindestens eine Zylinder der zweiten Gruppe ein Zylindervolumen V₂ aufweist mit *1* • *V₁* < *V₂* < *2* • *V₁*.

Vorteilhaft sind Ausführungsformen der selbstzündenden Brennkraftmaschine, bei denen der mindestens eine Zylinder der ersten Gruppe ein Zylindervolumen *V₁* aufweist und der mindestens eine Zylinder der zweiten Gruppe ein Zylindervolumen V₂ aufweist mit *1.3* • *V₁* < *V₂* < *2* • *V₁.*

Vorteilhaft sind Ausführungsformen der selbstzündenden Brennkraftmaschine, bei denen der mindestens eine Zylinder der ersten Gruppe ein Zylindervolumen *V₁* aufweist und der mindestens eine Zylinder der zweiten Gruppe ein Zylindervolumen V₂ aufweist mit *1.3* • *V₁* < *V₂* < *1.75* • *V₁.*

Vorteilhaft sind Ausführungsformen der selbstzündenden Brennkraftmaschine, bei denen jeder Zylinder zum Einbringen von Kraftstoff mit einer Direkteinspritzung ausgestattet ist.

Vorteilhaft sind dabei Ausführungsformen, bei denen jeder Zylinder zum Zwecke der Direkteinspritzung mit einer Einspritzdüse ausgestattet ist.

Nichtsdestotrotz können Ausführungsformen der selbstzündenden Brennkraftmaschine vorteilhaft sein, bei denen zum Zwecke einer Kraftstoffversorgung eine Saugrohreinspritzung vorgesehen ist.

Die zweite der Erfindung zugrunde liegende Teilaufgabe, nämlich ein Verfahren zum verbrauchsoptimierten Betreiben einer selbstzündenden Brennkraftmaschine einer zuvor beschriebenen Art aufzuzeigen, wird mit einem Verfahren gelöst, das dadurch gekennzeichnet ist, dass der mindestens eine schaltbare Zylinder der mindestens einen Gruppe in Abhängigkeit von der Last T der Brennkraftmaschine geschaltet wird.

Das bereits für die erfindungsgemäße Brennkraftmaschine Gesagte gilt auch für das erfindungsgemäße Verfahren, weshalb an dieser Stelle im Allgemeinen Bezug genommen wird auf die vorstehend hinsichtlich der Brennkraftmaschine gemachten Ausführungen. Die verschiedenen Brennkraftmaschinen erfordern teils unterschiedliche Verfahrensvarianten.

Zum Betreiben einer Brennkraftmaschine, bei der der mindestens eine Zylinder der zweiten Gruppe als zuschaltbarer Zylinder ausgebildet ist, sind Verfahrensvarianten vorteilhaft, bei denen der mindestens eine Zylinder der zweiten Gruppe
- bei Unterschreiten einer vorgebbaren Last *T_{down}* abgeschaltet wird, und
- bei Überschreiten einer vorgebbaren Last *Tᵤₚ* zugeschaltet wird.

Die für das Unterschreiten bzw. Überschreiten vorgegebenen Grenzlasten *T_{down}* und *Tᵤₚ* können gleich groß, aber auch verschieden groß sein. Bei in Betrieb befindlicher Brennkraftmaschine sind die Zylinder der ersten Zylindergruppe vorliegend ständig in Betrieb befindliche Zylinder. Es erfolgt lediglich ein Schalten der zweiten Zylindergruppe, d. h. ein Zuschalten bzw. Abschalten dieser zweiten Gruppe.

Vorteilhaft sind Verfahrensvarianten, bei denen der mindestens eine Zylinder der zweiten Gruppe abgeschaltet wird, sobald die vorgegebene Last *T_{down}* unterschritten wird und die momentane Last für eine vorgebbare Zeitspanne *Δt₁* niedriger ist als diese vorgegebene Last *T_{down}.*

Die Einführung einer zusätzlichen Bedingung für das Abschalten der Zylinder der zweiten Gruppe, d. h. die Teilabschaltung, soll ein zu häufiges Zu- und Abschalten verhindern, insbesondere eine Teilabschaltung, wenn die Last nur kurzzeitig die vorgegebene Last *T_{down}* unterschreitet und dann wieder steigt bzw. um den vorgegebenen Wert für die Last *T_{down}* schwankt, ohne dass das Unterschreiten eine Teilabschaltung rechtfertigen bzw. erfordern würde.

Aus diesen Gründen sind ebenfalls Verfahrensvarianten vorteilhaft, bei denen der mindestens eine Zylinder der zweiten Gruppe zugeschaltet wird, sobald die vorgegebene Last *Tᵤₚ* überschritten wird und die momentane Last für eine vorgebbare Zeitspanne *Δt₂* höher ist als diese vorgegebene Last *Tᵤₚ.*

Zum Betreiben einer Brennkraftmaschine, bei der sowohl der mindestens eine Zylinder der ersten Gruppe als auch der mindestens eine Zylinder der zweiten Gruppe als schaltbarer Zylinder ausgebildet ist, sind Verfahrensvarianten vorteilhaft, bei denen ausgehend von einem Betrieb des mindestens einen Zylinders der ersten Gruppe bei niedrigen Lasten
- auf den mindestens einen Zylinder der zweiten Gruppe bei Überschreiten einer ersten vorgebbaren Last *T_{up,1}* umgeschaltet wird.

Gemäß der vorstehenden Ausführungsform des erfindungsgemäßen Verfahrens wird ausgehend von niedrigen Lasten zunächst der mindestens eine Zylinder der ersten Gruppe befeuert, d. h. betrieben, um die angeforderte Leistung bereitzustellen, während der mindestens eine Zylinder der zweiten Gruppe abgeschaltet ist. Mit zunehmender Last erfolgt dann ein Umschalten zwischen den mindestens zwei Zylindergruppen, wobei der mindestens eine Zylinder der ersten Gruppe abgeschaltet und der mindestens eine Zylinder der zweiten Gruppe zugeschaltet wird, sobald eine Last *T_{up,1}* überschritten wird.

Vorteilhaft können in diesem Zusammenhang Ausführungsformen des Verfahrens sein, bei denen ausgehend von einem Betrieb des mindestens einen Zylinders der zweiten Gruppe bei weiter zunehmender Last der mindestens eine Zylinder der ersten Gruppe bei Überschreiten einer zweiten vorgebbaren Last *T_{up,2}* erneut zugeschaltet wird. Dadurch kann die Leistungsabgabe der Brennkraftmaschine weiter erhöht werden.

Vorteilhaft sind Ausführungsformen des Verfahrens, bei denen die vorgebbare Last *T_{down}, Tᵤₚ, T_{up,1}* und/oder *T_{up,2}* von der Drehzahl n der Brennkraftmaschine abhängig ist. Dann gibt es nicht nur eine konkrete Last, bei deren Unterschreiten oder Überschreiten unabhängig von der Drehzahl n geschaltet wird. Vielmehr wird drehzahlabhängig vorgegangen und ein Bereich im Kennfeld definiert, in dem teilabgeschaltet wird.

Grundsätzlich können weitere Betriebsparameter der Brennkraftmaschine als Kriterium für eine Teilabschaltung herangezogen werden, beispielsweise die Motortemperatur oder die Kühlmitteltemperatur nach einem Kaltstart der Brennkraftmaschine.

Vorteilhaft sind Ausführungsformen des Verfahrens, bei denen die Kraftstoffversorgung eines abgeschalteten Zylinders deaktiviert wird. Es ergeben sich Vorteile in Bezug auf den Kraftstoffverbrauch und die Schadstoffemissionen, was die Zielsetzung, die mit der Teilabschaltung verfolgt wird, nämlich den Kraftstoffverbrauch zu mindern und den Wirkungsgrad zu verbessern, unterstützt.

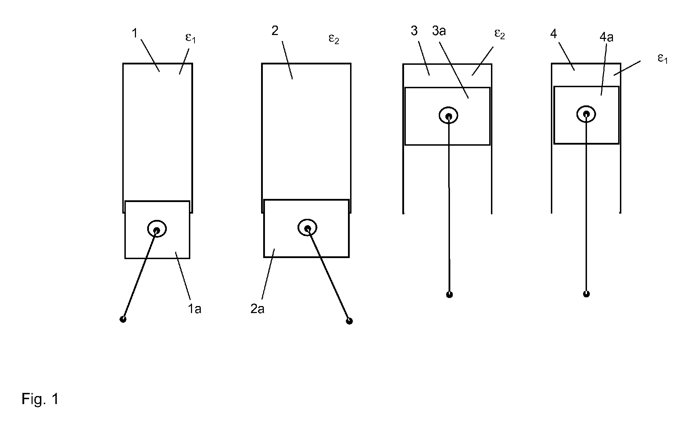

Im Folgenden wird die Erfindung anhand einer Ausführungsform der selbstzündenden Brennkraftmaschine gemäß der Figur 1 näher erläutert. Hierbei zeigt:
- Fig. 1: schematisch die Zylinder einer ersten Ausführungsform der selbstzündenden Brennkraftmaschine.

Figur 1 zeigt schematisch die vier Zylinder 1, 2, 3, 4 eines selbstzündenden Vierzylinder-Reihenmotors.

Die vier in Reihe angeordneten Zylinder 1, 2, 3, 4 bilden zwei Zylindergruppen mit jeweils zwei Zylindern 1, 2, 3, 4, wobei die erste Gruppe die außenliegenden Zylinder 1, 4 und die zweite Gruppe die innenliegenden Zylinder 2, 3 umfaßt. Bei der gezeigten Momentaufnahme befinden sich die Kolben 1a, 2a des ersten und des zweiten Zylinders 1, 2 im unteren Totpunkt und die Kolben 3a, 4a des dritten und des vierten Zylinders 3, 4 im oberen Totpunkt.

Die beiden Zylindergruppen zeichnen sich durch unterschiedliche Verdichtungsverhältnisse aus, wobei die Zylinder 1, 4 der ersten Gruppe ein Verdichtungsverhältnis *ε₁* aufweisen und die Zylinder 2, 3 der zweiten Gruppe ein Verdichtungsverhältnis *ε₂* aufweisen mit *ε₂* < *ε₁*. Die Zylinder 2, 3 der zweiten Gruppe sind dabei als zuschaltbare Zylinder 2, 3 ausgebildet, die im Teillastbetrieb bei Unterschreiten einer vorgebbaren Last abgeschaltet werden. Dadurch erhöht sich die Lastanforderung an die weiter in Betrieb befindlichen Zylinder 1, 4 der ersten Gruppe, die dann bei Lasten mit geringerem spezifischem Kraftstoffverbrauch arbeiten. Eine Verbesserung des Wirkungsgrades ist die Folge.

### Bezugszeichen

- 1: erster Zylinder
- 1a: Kolben des ersten Zylinders
- 2: zweiter Zylinder
- 2a: Kolben des zweiten Zylinders
- 3: dritter Zylinder
- 3a: Kolben des dritten Zylinders
- 4: vierter Zylinder
- 4a: Kolben des vierten Zylinders

- *εᵢ*: Verdichtungsverhältnis eines Zylinders bzw. einer Gruppe von Zylindern
- *ε₁*: Verdichtungsverhältnis einer ersten Gruppe von Zylindern
- *ε₂*: Verdichtungsverhältnis einer zweiten Gruppe von Zylindern
- *λ*: Luftverhältnis
- *η*: Wirkungsgrad

- *n*: Drehzahl der Brennkraftmaschine
- *T*: Last
- *T_{down}*: vorgebbare Last für das Unterschreiten einer Last
- *T_{low}*: Last im unteren Teillastbereich
- *T_{max,n}*: maximale Last bei einer vorliegenden Drehzahl n
- *Tᵤₚ*: vorgebbare Last für das Überschreiten einer Last
- *T_{up,1}*: erste vorgebbare Last für das Überschreiten einer Last
- *T_{up,2}*: zweite vorgebbare Last für das Überschreiten einer Last
- *Vᵢ*: Zylindervolumen
- *V₁*: Zylindervolumen einer ersten Gruppe von Zylindern
- *V₂*: Zylindervolumen einer zweiten Gruppe von Zylindern

## Patentansprüche

1. Selbstzündende Brennkraftmaschine mit mindestens zwei Zylindern (1, 2, 3, 4), bei der mindestens zwei Zylinder (1, 2, 3, 4) in der Art konfiguriert sind, dass sie mindestens zwei Gruppen mit jeweils mindestens einem Zylinder (1, 2, 3, 4) bilden, wobei der mindestens eine Zylinder (2, 3) mindestens einer Gruppe als lastabhängig schaltbarer Zylinder (2, 3) ausgebildet ist, **dadurch gekennzeichnet, dass**
- sich die mindestens zwei Gruppen durch unterschiedliche Verdichtungsverhältnisse *εᵢ* auszeichnen, wobei
- der mindestens eine Zylinder (1, 4) einer ersten Gruppe ein Verdichtungsverhältnis *ε₁* aufweist und der mindestens eine Zylinder (2, 3) einer zweiten Gruppe ein Verdichtungsverhältnis *ε₂* aufweist mit *ε₂* < *ε₁*.

2. Selbstzündende Brennkraftmaschine nach Anspruch 1, **dadurch gekennzeichnet, dass** bei Teilabschaltung im unteren Teillastbereich der mindestens eine Zylinder (1, 4) der ersten Gruppe der mindestens eine in Betrieb befindliche Zylinder der Brennkraftmaschine ist.

3. Selbstzündende Brennkraftmaschine nach Anspruch 1 oder 2, **dadurch gekennzeichnet, dass** der mindestens eine Zylinder (2, 3) der zweiten Gruppe als zuschaltbarer Zylinder ausgebildet ist, der bei Unterschreiten einer vorgebbaren Last *T_{down}* abgeschaltet ist und bei Überschreiten einer vorgebbaren Last *Tᵤₚ* zugeschaltet ist.

4. Selbstzündende Brennkraftmaschine nach Anspruch 1 oder 2, **dadurch gekennzeichnet, dass** sowohl der mindestens eine Zylinder (1, 4) der ersten Gruppe als auch der mindestens eine Zylinder (2, 3) der zweiten Gruppe als schaltbarer Zylinder ausgebildet ist.

5. Selbstzündende Brennkraftmaschine nach einem der vorherigen Ansprüche, **dadurch gekennzeichnet, dass** die mindestens zwei Zylinder (1, 2, 3, 4) zwei Gruppen mit jeweils mindestens einem Zylinder (1, 2, 3, 4) bilden.

6. Selbstzündende Brennkraftmaschine nach einem der vorherigen Ansprüche, **dadurch gekennzeichnet, dass** der mindestens eine Zylinder (1, 4) der ersten Gruppe ein Verdichtungsverhältnis *ε₁* aufweist und der mindestens eine Zylinder (2, 3) der zweiten Gruppe ein Verdichtungsverhältnis *ε₂* aufweist mit *ε₂* +*1* < *ε₁*.

7. Selbstzündende Brennkraftmaschine nach einem der vorherigen Ansprüche, **dadurch gekennzeichnet, dass** der mindestens eine Zylinder (1, 4) der ersten Gruppe ein Verdichtungsverhältnis *ε₁* aufweist und der mindestens eine Zylinder (2, 3) der zweiten Gruppe ein Verdichtungsverhältnis *ε₂* aufweist mit *ε₂* + 2 < *ε₁*.

8. Selbstzündende Brennkraftmaschine nach einem der vorherigen Ansprüche, **dadurch gekennzeichnet, dass** der mindestens eine Zylinder (2, 3) der zweiten Gruppe ein Verdichtungsverhältnis *ε₂* aufweist mit 13 < *ε₂* < 17.

9. Selbstzündende Brennkraftmaschine nach einem der vorherigen Ansprüche, **dadurch gekennzeichnet, dass** der mindestens eine Zylinder (1, 4) der ersten Gruppe ein Verdichtungsverhältnis *ε₁* aufweist mit *17* < *ε₁* < *20.*

10. Selbstzündende Brennkraftmaschine nach einem der vorherigen Ansprüche, **dadurch gekennzeichnet, dass**
- sich die mindestens zwei Gruppen durch unterschiedliche Zylindervolumen *Vᵢ* auszeichnen, wobei
- der mindestens eine Zylinder (1, 4) der ersten Gruppe ein Zylindervolumen *V₁* aufweist und der mindestens eine Zylinder (2, 3) der zweiten Gruppe ein Zylindervolumen *V₂* aufweist mit *V₂* > *V₁*.

11. Selbstzündende Brennkraftmaschine nach einem der vorherigen Ansprüche, **dadurch gekennzeichnet, dass** jeder Zylinder (1, 2, 3, 4) zum Einbringen von Kraftstoff mit einer Direkteinspritzung ausgestattet ist.

12. Verfahren zum Betreiben einer fremdgezündeten Brennkraftmaschine nach einem der vorherigen Ansprüche, **dadurch gekennzeichnet, dass** der mindestens eine schaltbare Zylinder (2, 3) der mindestens einen Gruppe in Abhängigkeit von der Last T der Brennkraftmaschine geschaltet wird.

13. Verfahren nach Anspruch 12 zum Betreiben einer Brennkraftmaschine, bei der der mindestens eine Zylinder (2, 3) der zweiten Gruppe als zuschaltbarer Zylinder ausgebildet ist, **dadurch gekennzeichnet, dass,** der
- bei Unterschreiten einer vorgebbaren Last *T_{down}* abgeschaltet wird, und
- bei Überschreiten einer vorgebbaren Last *Tᵤₚ* zugeschaltet wird.

14. Verfahren nach Anspruch 12 zum Betreiben einer Brennkraftmaschine, bei der sowohl der mindestens eine Zylinder (1, 4) der ersten Gruppe als auch der mindestens eine Zylinder (2, 3) der zweiten Gruppe als schaltbarer Zylinder ausgebildet ist, **dadurch gekennzeichnet, dass** ausgehend von einem Betrieb des mindestens einen Zylinders (1, 4) der ersten Gruppe bei niedrigen Lasten
- auf den mindestens einen Zylinder (2, 3) der zweiten Gruppe bei Überschreiten einer ersten vorgebbaren Last *T_{up,1}* umgeschaltet wird.

15. Verfahren nach Anspruch 14, **dadurch gekennzeichnet, dass** ausgehend von einem Betrieb des mindestens einen Zylinders (2, 3) der zweiten Gruppe bei weiter zunehmender Last der mindestens eine Zylinder (1, 4) der ersten Gruppe bei Überschreiten einer zweiten vorgebbaren Last *T_{up,2}* zugeschaltet wird.

16. Verfahren nach einem der Ansprüche 12 bis 15, **dadurch gekennzeichnet, dass** die vorgebbare Last *T_{down}, Tᵤₚ, T_{up,1}* und/oder *T_{up,2}* von der Drehzahl n der Brennkraftmaschine abhängig ist.
